# EUROPÄISCHE PATENTSCHRIFT

(11) **EP 1 544 660 B1**
(45) Veröffentlichungstag und Bekanntmachung des Hinweises auf die Patenterteilung: **04.02.2009**
(21) Anmeldenummer: 03029328.6
(22) Anmeldetag: 19.12.2003
(51) Int. Cl.: G02B 27/01

(54) **Anordnung zur Visualisierung von Informationen in einem Kraftfahrzeug**
Arrangement for visualizing information in a motor vehicle
Ensemble pour la visualisation d'informations dans un véhicule automobile

(43) Veröffentlichungstag der Anmeldung: 22.06.2005
(60) Teilanmeldung: 08011866.4
(73) Patentinhaber: CARL ZEISS JENA GmbH, 07745 Jena (DE)
(72) Erfinder: Piehler, Eberhard, 07778 Lehesten (DE)
(74) Vertreter: Kunz, Herbert

(56) Entgegenhaltungen:
- EP-A- 0 391 231
- EP-A- 0 535 876
- DE-A- 10 224 016
- DE-A- 19 751 649
- US-A- 6 043 937
- US-A1- 2002 080 495
- US-B1- 6 452 577

## Beschreibung

Die Erfindung betrifft eine Anordnung zur Visualisierung von Informationen in einem Kraftfahrzeug, umfassend eine optische Einrichtung zum Projizieren wenigstens einer Anzeige zur Bildung eines virtuellen Bildes vor oder in einem Bereich einer Windschutzscheibe des Fahrzeuges, wobei als bilderzeugende Elemente Microchips, wie DMD's oder LCoS vorgesehen sind.

Es ist allgemein bekannt, dass in Kraftfahrzeugen sogenannte Head-up Display - Vorrichtungen eingesetzt werden, welche eine Information, die von einer Anzeigevorrichtung geliefert wird, auf eine Projektionsfläche vor dem Fahrersitz projiziert, wobei ein virtuelles Bild dieser Anzeige vor der Frontscheibe entsteht.
Eine derartige Lösung wird beispielsweise in DE-OS 197 51 649 A1 und DE 102 24 016 A1 beschrieben.

Üblicherweise besitzen diese Einrichtungen einen Projektor, der das von der Anzeige ausgesandte Licht gegen die Frontscheibe wirft. Die Frontscheibe wirkt dabei als Kombinator, reflektiert das Licht und stellt ein für den Fahrer sichtbares virtuelles Bild vor der Frontscheibe bereit.

Der wesentliche Vorteil derartiger Display's ist, dass die scheinbare Position der Informationsdaten in einem Bereich liegt, der vom Fahrer wahrgenommen wird, ohne dabei den Blick von der Fahrbahn abzuwenden und ohne das Auge auf eine kurze Entfernung fokusieren zu müssen.

Ein virtuelles Bild, welches beispielsweise in einem Abstand von 2,5 m bis 3 m vor dem Auge des Fahrers entsteht, sollte dabei horizontal etwa einen Blickwinkel von 6 bis 12 Grad ausfüllen und von beiden Augen aus sichtbar sein.

Bei der Bilderzeugung werden im zunehmenden Maße Mikrochips, wie beispielsweise DMD's oder LCoS verwendet. Dabei sind Formate von 10 mm Breite bei einer numerischen Apertur von 0,2 (etwa 12 Grad) üblich. Betrachtet man ein virtuelles Bild in einem Abstand von 3 m bei einem Bildfeld von 6 bis 12 Grad, so ergibt sich eine Bildausdehnung von 315 bis 630 mm. Auf Grund der angenommenen Apertur der Chips würde sich dabei ein Pupillendurchmesser am Ort des Auges von 40 bis 20 mm ergeben. Dies bedeutet, dass bei der Anwendung der gebräuchlichsten Mikrochips als bilderzeugende Elemente keine genügend große Pupillenfläche ausgeleuchtet werden kann, so dass das virtuelle Bild nicht gleichzeitig von beiden Augen wahrgenommen wird.

Neben dem Problem der Ausleuchtung einer genügend großen Pupillenfläche haben derartige Anordnungen den Nachteil, dass die optische Einrichtung zur Erzeugung des Bildfeldes und der Ausleuchtung der Pupillenfläche sehr groß ist, da zwischen der optischen Einrichtung und dem Auge des Fahrers relativ große Abstände zu überbrücken sind.

Ausgehend von den beschriebenen Nachteilen liegt der Erfindung die Aufgabe zugrunde, eine Anordnung zur Visualisierung von Informationen in einem Kraftfahrzeug dahingehend weiterzubilden, dass bei Minimierung der Elemente der optischen Einrichtung eine genügend große Pupillenfläche ausgeleuchtet wird, um das virtuell erzeugte Bild der Informationen von beiden Augen zu erkennen.

Diese Aufgabe wird durch eine Anordnung nach Anspruch 9 gelöst. Bevorzügte Ausführungsformen sind Gegenstand der Unteransprüche wesentliches Merkmal ist, dass zum Zwecke der Ausleuchtung einer genügend großen Pupillenebene zwischen der optischen Einrichtung und der Pupillenebene Mittel zur Aufspaltung des Lichtstromes in Teillichtströme angeordnet sind, wobei zweckmäßigerweise die Mittel zur Lichtstromaufspaltung so konzipiert sind, dass ein erster Teillichtstrom dem linken Auge und ein zweiter Teillichtstrom dem rechten Auge zugeordnet ist.

Infolge der Aufspaltung des Lichtstromes durch ein zwischen der optischen Einrichtung und der Pupillenebene angeordnetes Element in zwei, jeweils einem Auge zugeordnete Teillichtströme, wird eine energetisch effektive Ausleuchtung beider Augenpupillen erzielt. Durch eine einfache Aufspaltung entsteht das virtuelle Bild für die beide Augen an verschiedenen Orten. Dies kann korrigiert werden, indem in die Strahlengänge der Teillichtströme entsprechende Umlenkelemente zur erneuten, gewünschten Ablenkung angeordnet werden.

Zur Lichtstromaufspaltung ist ein reflektives polarisationsoptisches Element vorgesehen .

Die Verwendung eines polarisationsoptischen Elementes erweist sich insoweit als vorteilhaft, da dadurch eine für die beiden Teillichtströme angepaßte Umlenkung auch an einem Ort vorgenommen werden kann, an dem sich die Teillichtströme noch durchdringen.

Das reflektive polarisationsoptische Element ist ein optischer Keil wobei die Lichtstromeintrittsfläche eine Polarisationsteilerschicht aufweist, an welcher der erste Teillichtstrom unter einem Winkel α zur Einfallsrichtung in die Pupillenebene reflektiert wird und der in den Keil eintretende sowie auf die der Lichteintrittsfläche gegenüberliegende verspiegelte Keilfläche teffende zweite Teillichtstrom durch Reflexion unter einem Winkel β zur Einfallsrichtung in die Pupillenebene gelangt. Die Winkel α und β sind dabei abhängig vom Keilwinkel, so dass sich durch Veränderung des Keilwinkels der Ort der auftreffenden Teillichtströme bestimmen lässt.

Zum Zwecke der Richtungsorientierung der Teillichtströme ist es sinnvoll optisch brechende Umlenkelemente in den Strahlengängen vorzusehen, da damit die Größe der abbildenden Optik minimiert werden kann.

Eine vorteilhafte Ausgestaltung der erfindungsgemäßen Anordnung besteht ferner darin, dass sich ein Umlenkelement, mit welchem die Teillichtströme in die Augenpupillen eingespiegelt werden, im oberen Bereich der Frontscheibe etwa in der Höhe des Fahrzeuginnenrückspiegels befindet. Bei dieser Anordnung ist das Auge zur Aufnahme der Informationen nur geringfügig von der Fahrbahn abzuwenden. Die Verwendung von Umlenkelementen mit Brechkraft an diesem Ort wirkt sich günstig auf die Baugröße der gesamten Abbildungseinheit aus.

Eine vorteilhafte Ausgestaltung der erfindungsgemäßen Anordnung besteht ferner darin, dass im Beleuchtungsteil eine Vorrichtung zur Homogenisierung der Pupillenausleuchtung integriert ist. Die für Projektoren eingesetzten Lampen haben eine ungleichmäßige Intensitätsverteilung über die Winkel (bei elliptischen Reflektoren) bzw. über die Höhe der Symmetrieachse (bei parabolischen Reflektoren), was eine ungleimäßige Energieverteilung in der Pupille zur Folge hat und folglich bei der Bewegung des Auges innerhalb der ausgeleuchteten Pupille zu Helligkeitsunterschieden bei der Wahrnahme des virtuellen Bildes führt. Durch eine entsprechende Einrichtung, zum Beispiel einer Streuscheibe innerhalb eines zur gleichmäßigen Ausleuchtung des Bildfeldes vorgesehenen Integrators, kann dieser Mangel beseitigt werden.

Anhand eines Ausführungsbeispieles soll die erfindungsgemäße Anordnung näher erläutert werden. Die dazugehörenden Figuren zeigen:
- Fig.1:: eine vergleichende schematische Darstellung einer Anordnung zur Lichtstromaufspaltung (transmissiv)
- Fig.2:: eine vergleichende schematische Darstellung der Lichtstromaufspaltung über ein Element mit Fresnellstruktur (transmissiv)
- Fig.3:: eine schematische Darstellung der erfindungsgemäßen Lichtstromaufspaltung über ein polarisationsoptisches Element (reflektiv)

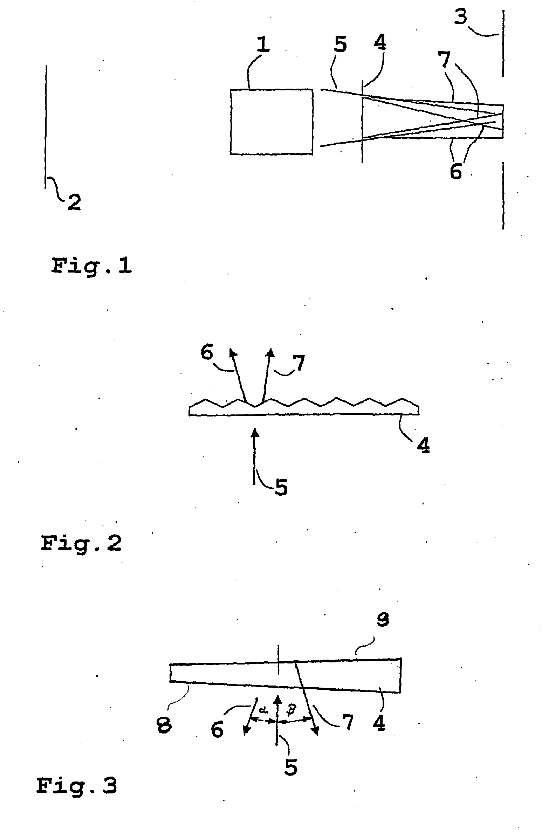

Figur 1 zeigt in einer vereinfachten Darstellungsweise eine Anordnung zur Visualisierung von Informationen in einem Kraftfahrzeug mit einer optischen Einrichtung 1. Die optische Einrichtung 1 projiziert die von bilderzeugenden Mikrochips, wie DMD's oder LCOS aufgenommen Informationen auf die Frontscheibe eines Kraftfahrzeuges und erzeugt ein virtuelles Bild in der Projektionsebene 2.

Zwischen der optischen Einrichtung 1 und der Pupillenebene 3 befindet sich ein transmissives optisches Element 4, welches den von einem nicht näher dargestellten Objektiv der optischen Einrichtung 1 ausgehenden kegelförmigen Strahlengang 5 (Lichtstrom) in zwei Teillichtströme 6 und 7, die jeweils einem Auge des Fahrers zugeordnet sind, aufspaltet.
Die Aufspaltung des Lichtstromes 5 in zwei Teillichtströme 6 und 7 ermöglicht, dass das virtuelle Bild der übertragenen Informationen von beiden Augen wargenommen werden kann.

In Figur 2 zeigt zum Vergleich ein transmissives optisches Element 4 mit einer Fresnellstruktur . Die Aufspaltung des Lichtstromes 5 in die beiden Teillichtströme 6 und 7 erfolgt dabei über die Flanken der Fresnellstruktur.

Ein erfindungsgemäßes optisches Element 4 (reflektiv) wird in Figur 3 gezeigt. Das optische Element 4 besteht dabei aus einem polarisationsoptischen Keil, wobei die Lichteintrittsfläche 8 mit einer nicht näher dargestellten Polarisationsschicht versehen ist. Der nicht in das optische Element 4 eindringende Teil des Lichtstromes 5 wird dabei unter einem Winkel α zur Einfallsrichtung in den Teillichtstrom 6 reflektiert. Die der Lichteintrittsfläche 8 gegenüberliegende Fläche 9 des optischen Elementes 4 ist refektierend (Spiegelfläche) ausgebildet, so dass der in das optische Element 4 eindringende Anteil des Lichtstromes 5 an der Fläche 9 reflektiert wird und als Teillichtstrom 7 das optische Elemnent 4 unter einem Winkel β wieder verläßt. Die Winkel α und β können dabei durch die Brechkraft des optischen Elementes 4 sowie den Keilwinkel zwischen den Flächen 8 und 9 verändert werden.

### Bezugszeichenliste

- 1: optische Einrichtung
- 2: Projektionsebene
- 3: Pupillenebene
- 4: optisches Elemment
- 5: Lichtstrom
- 6,7: Teillichtströme
- 8,9: Fläche
- α,β: Winkel

## Patentansprüche

1. Anordnung zur Visualisierung von Informationen in einem Kraftfahrzeug mit einer Frontscheibe, umfassend eine optische Einrichtung (1) zum Projizieren eines Lichtstroms (5) auf einen Bereich der Frontscheibe zur Bildung eines virtuelles Bildes vor oder in einem Bereich der Frontscheibe, wobei als bilderzeugende Elemente Microchips vorgesehen sind,
**dadurch gekennzeichnet, dass**
zum Zwecke der Ausleuchtung der Pupillenebene (3) zwischen der optischen Einrichtung und der Pupillenebene (3) Mittel (4) zum Aufspalten des Lichtstroms (5) in Teillichtströme (6, 7) angeordnet sind, so dass ein erster Teillichtstrom (6) dem linken Auge und ein zweiter Teillichtstrom (7) dem rechten Auge zugeordnet ist, wobei zur Aufspaltung des Lichtstromes (5) in Teillichtströme (6, 7) ein reflektives polarisationsoptisches Element (4) vorgesehen ist und das reflektive polarisationsoptische Element (4) ein Keil ist, wobei die Lichtstromeintrittsfläche (8) eine Polarisationsteilerschicht aufweist, an welcher der erste Teillichtstrom (6) unter einem Winkel α zur Einfallsrichtung in die Pupillenebene (3) reflektiert wird und der in den Keil eintretende sowie auf die der Lichteintrittsfläche (8) gegenüberliegenden verspiegelten Keilfläche (9) treffende zweite Teillichtstrom (7) durch Reflexion unter einem Winkel β zur Einfallsrichtung in die Pupillenebene (3) gelangt.

2. Anordnung nach Anspruch 1,
**dadurch gekennzeichnet, dass**
zum Zwecke der Richtungsorientierung der Teillichtströme (6, 7) optisch brechende Umlenkelemente in den Strahlengängen vorgesehen sind.

3. Anordnung nach Anspruch 2,
**dadurch gekennzeichnet, dass**
die Elemente zur Richtungsorientierung der Teillichtströme (6, 7) fokussierende oder zerstreuende Wirkung besitzen.

4. Anordnung nach einem der vorangehenden Ansprüche,
**dadurch gekennzeichnet, dass**
in der Beleuchtungseinrichtung des Mikrochips eine Vorrichtung zur homogenen Ausleuchtung der Pupillenebene 83) vorgesehen ist und die Vorrichtung zur homogenen Ausleuchtung der Pupillenebene (3) eine Streuscheibe umfasst.

## Claims

1. A system for visualising information in a motor vehicle with a windscreen comprising an optical device (1) for projecting a luminous flux (5) onto a region of the windscreen in order to form a virtual image in front of or in a region of the windscreen, microchips being provided as image-generating elements,
**characterised in that**
for the purpose of illuminating the pupil plane (3), disposed between the optical device and the pupil plane (3) are means (4) for splitting the luminous flux (5) into partial luminous fluxes (6, 7) so that a first partial luminous flux (6) is assigned to the left eye, and a second partial luminous flux (7) to the right eye, a reflective polarisation-optical element (4) being provided to split the luminous flux (5) into partial luminous fluxes (6, 7), and the reflective polarisation-optical element (4) being a wedge, the luminous flux inflow surface (8) having a polarisation divider layer on which the first partial luminous flux (6) is reflected at an angle α to the direction of arrival in the pupil plane (3) and the second partial luminous flux (7) passing into the wedge and striking the reflected wedge surface (9) lying opposite the light inlet surface (8) passing into the pupil plane (3) by reflection at an angle β to the direction of arrival.

2. The system according to Claim 1,
**characterised in that**
optically breaking deflection elements are provided in the optical paths for the purpose of directional orientation of the partial luminous fluxes (6, 7).

3. The system according to Claim 2,
**characterised in that**
the elements for the directional orientation of the partial luminous fluxes (6, 7) have a focussing or diffusing effect.

4. The system according to any of the preceding claims,
**characterised in that**
an apparatus for the homogeneous illumination of the pupil plane (3) is provided in the illumination device made of microchips, and the apparatus for the homogeneous illumination of the pupil plane (3) comprises a diffusion disc.

## Revendications

1. Dispositif de visualisation d'informations dans un véhicule automobile pourvu d'un pare-brise, comprenant un dispositif optique (1) permettant de projeter un flux lumineux (5) sur une partie du pare-brise en vue de former une image virtuelle devant ou dans une partie du pare-brise, les éléments formateurs d'image consistant en des micropuces,
**caractérisé en ce que**
des moyens (4) permettant de dissocier le flux lumineux (5) en des flux lumineux partiels (6, 7) sont prévus entre le dispositif optique et le plan de la pupille (3) pour permettre l'éclairage du plan de la pupille (3), si bien qu'un premier flux lumineux partiel (6) est associé à l'oeil gauche et qu'un second flux lumineux partiel (7) est associé à l'oeil droit, un élément photoélastique réflecteur (4) étant prévu pour dissocier le flux lumineux (5) en des flux lumineux partiels (6, 7), cet élément photoélastique réflecteur (4) étant un coin, la surface d'entrée de flux lumineux (8) présentant une couche séparatrice de polarisation sur laquelle le premier flux lumineux partiel (6) est réfléchi dans le plan de la pupille (3) selon un angle α par rapport à la direction d'incidence et le second flux lumineux partiel (7) qui pénètre dans le coin et qui atteint la surface (9) de coin réfléchissante faisant face à la surface d'entrée de lumière (8) parvient dans le plan de la pupille (3) par réflexion selon un angle β par rapport à la direction d'incidence.

2. Dispositif selon la revendication 1,
**caractérisé en ce que**
des éléments déflecteurs optiquement réfringents sont prévus sur le parcours des rayons pour permettre l'orientation directionnelle des flux lumineux partiels (6, 7).

3. Dispositif selon la revendication 2,
**caractérisé en ce que**
les éléments servant à l'orientation directionnelle des flux lumineux partiels (6, 7) ont un effet focalisateur ou diffractionnel.

4. Dispositif selon l'une des revendications précédentes,
**caractérisé en ce que**
un dispositif permettant l'éclairage homogène du plan de la pupille (3) est prévu dans le dispositif d'éclairage composé de micropuces et le dispositif permettant l'éclairage homogène du plan de la pupille (3) comprend un diffuseur.
